# EUROPÄISCHE PATENTANMELDUNG

(11) **EP 4 729 693 A1**
(43) Veröffentlichungstag der Anmeldung: **22.04.2026**
(21) Anmeldenummer: 24206579.5
(22) Anmeldetag: 15.10.2024
(51) Int. Cl.: E01C 19/00, E01C 19/48

(54) **MESSVORRICHTUNG SOWIE VERFAHREN ZUM KONTINUIERLICHEN ABTASTEN EINER HÖHENREFERENZ**

(71) Anmelder: Joseph Vögele AG, 67067 Ludwigshafen (DE)
(72) Erfinder: PETERSEN, Jerome, 68163 Mannheim (DE); BERNATZ, Dirk, 67112 Mutterstadt (DE); GRIMM, Frank, 68535 Edingen-Neckarhausen (DE); BUTZ, Benjamin, 76199 Karlsruhe (DE)
(74) Vertreter: Grünecker Patent- und Rechtsanwälte PartG mbB

(57) **Zusammenfassung**

Die Erfindung betrifft eine Messvorrichtung (4, 4', 4") für einen Straßenfertiger (1), umfassend einen Höhensensor (7) sowie ein Schwenkmodul (9), das am Höhensensor (7) um eine Schwenkachse (8) schwenkbar gelagert ist und das eine Abtasteinrichtung (10) mit mindestens zwei Bügeltastern (11a, 11b) zum Abtasten eines entlang einer Einbaustrecke des Straßenfertigers (1) als Höhenreferenz gespannten Seils (6) aufweist, wobei die beiden Bügeltaster (11a, 11b) derart konfiguriert sind, dass einer der beiden Bügeltaster (11a, 11b) mindestens immer dann in einer ersten Ausrichtung ist (14a, 14b), in welcher er auf dem Seil (6) aufliegend positioniert ist, wenn der andere der beiden Bügeltaster (11a, 11b) mittels einer zum Spannen des Seils (6) eingesetzten Halterung (5) in eine zweite Ausrichtung (15a, 15b) gedrückt ist, in welcher er vom Seil (6) beabstandet ist.

## Beschreibung

Die vorliegende Erfindung betrifft eine Messvorrichtung für einen Straßenfertiger gemäß Anspruch 1. Des Weiteren bezieht sich die vorliegende Erfindung auf ein Verfahren zum kontinuierlichen Abtasten einer Höhenreferenz gemäß dem unabhängigen Anspruch 15.

Es ist bekannt, dass an einem Straßenfertiger ein an der Einbaubohle des Straßenfertigers befestigter, mechanischer Höhensensor zur mechanischen Abtastung eines entlang der Einbaustrecke des Straßenfertigers gespannten Seils bzw. zur Abtastung eines Leitdrahts verwendet werden kann, um mittels der kontaktbedingten Seilabtastung Unebenheiten im Untergrund, auf welchem sich der Straßenfertiger bewegt, zu erfassen und darauf basierend eine Nivellierung der höhenverstellbaren Einbaubohle durchzuführen, sodass eine ebene Einbauschicht herstellbar ist.

Problematisch bei herkömmlichen, mechanischen Höhensensoren ist, dass diese an Spannblöcken, d.h. an entlang der Einbaustrecke zum Spannen des Seils bzw. des Leitdrahts montierten Halterungen, hängen bleiben können. Deshalb werden die herkömmlichen Höhensensoren bisher entweder im Bereich der jeweiligen Spannblöcke deaktiviert oder es werden die Spannblöcke von einem neben dem Straßenfertiger mitlaufenden Bediener zur Seite gedrückt, damit die Höhensensoren daran nicht hängen bleiben können. Die zeitweise Deaktivierung der Höhensensoren kann jedoch zu Einbaufehlern führen, weil das Nivelliersystem während des Deaktivierungsintervalls nicht auf Unebenheiten im Untergrund reagiert. Das Wegdrücken der Halterungen ist arbeitsintensiv für den Bediener und führt dazu, dass das Seil entlang der Einbaustrecke gelockert wird, sodass es mehrmals vom Bediener nachgespannt werden muss. Ohne derartige problembehaftete Maßnahmen durchzuführen, kann es allerdings sein, dass der mechanische Höhensensor für den Fall, dass er an den Halterungen aus seiner Normalführung heraus weggedrückt bzw. angehoben wird, die Nivellierung der Einbaubohle darauf anspricht, wodurch es zu unerwünschten Profilfehlern in der Einbauschicht kommen kann.

DE 21 2024 000 014 U1 offenbart einen mechanischen Höhensensor zum Abtasten einer entlang der Einbaustrecke des Straßenfertigers gespannten Referenz in Form eines Seils oder eines Leitdrahts. Der Höhensensor umfasst einen Bügeltaster in Form eines Drehkreuzes, welches sich während der Einbaufahrt beim Anstoßen an einer Halterung wegdrehen kann und dadurch vom Seil weg über die Halterung gehoben wird. Beim Wegdrehen des Drehkreuzes an einer Halterung bewegt sich ein das Drehkreuz bildender oberer Sensorteil des Höhensensors über eine ansteigende Schrägführung eines unteren Sensorteils nach oben, so dass das an der Halterung anstoßende Drehkreuz vom Seil beabstandet wird und über die Halterung gehoben wird, wobei sich das Drehkreuz durch Weiterdrehen an der Halterung entlang einer abfallenden Schrägführung des unteren Sensorteils senkt und erneut mit dem Seil in Kontakt gebracht wird. Obwohl es hiermit dem Drehkreuz gelingt, die entlang der Einbaustrecke positionierten Halterungen ohne manuelles Eingreifen zu überspringen, ist es bei dieser Messvorrichtung von Nachteil, dass an jeweiligen Halterungen zumindest temporär keiner der am Drehkreuz befestigten Taster auf dem Seil aufliegt, sprich der Messvorgang zum mechanischen Abtasten der Höhenreferenz an den jeweiligen Halterungen unterbrochen wird. Gerade im Bereich der Halterungen vorliegende Unebenheiten im Untergrund, auf welchem sich der Straßenfertiger bewegt, werden deshalb bei der Messung für die Nivellierung der Einbaubohle nicht berücksichtigt bzw. nur ungenau erfasst, sodass die Nivellierung ggf. fehlerbehaftet ist.

Aufgabe der vorliegenden Erfindung ist es, eine hinsichtlich der in Zusammenhang mit dem Stand der Technik beschriebenen Nachteile verbesserte Messvorrichtung sowie ein dementsprechendes Verfahren zur Verfügung zu stellen.

Diese Aufgabe wird gelöst mittels einer Messvorrichtung gemäß Anspruch 1 sowie anhand eines Verfahrens gemäß Anspruch 15.

Vorteilhafte Weiterbildungen der Erfindung sind durch die jeweiligen Gegenstände der Unteransprüche gegeben.

Die Erfindung bezieht sich auf eine Messvorrichtung für einen Straßenfertiger, die einen Höhensensor sowie ein Schwenkmodul umfasst, welches am Höhensensor um eine Schwenkachse schwenkbar gelagert ist und welches eine Abtasteinrichtung mit mindestens zwei Bügeltastern zum Abtasten eines entlang einer Einbaustrecke des Straßenfertigers als Höhenreferenz gespannten Seils aufweist. Die Erfindung sieht vor, dass die beiden Bügeltaster derart konfiguriert sind, dass einer der beiden Bügeltaster mindestens immer dann in einer ersten Ausrichtung ist, in welcher er auf dem Seil aufliegend positioniert ist, wenn der andere der beiden Bügeltaster mittels einer zum Spannen des Seils eingesetzten Halterung in eine zweite Ausrichtung gedrückt ist, in welcher er vom Seil beabstandet ist.

Damit kontaktiert mindestens immer einer der beiden Bügeltaster das Seil, selbst für den Fall, dass einer der beiden Bügeltaster an einer Halterung anstößt und dadurch vom Seilkontakt gelöst wird. Demzufolge ist es anhand der erfindungsgemäßen Messvorrichtung möglich, auch beim Passieren einer Halterung des Seils ein kontinuierliches, kontaktbedingtes Abtasten des Seils aufrechtzuerhalten. In anderen Worten hält die erfindungsgemäße Messvorrichtung den Kontakt zum Seil, ohne diesen an einer Halterung aufzugeben. Selbst im Bereich der Halterungen kann damit ein unterbrechungsfreies Abtasten des Seils, sprich eine kontinuierliche Führung der Abtasteinrichtung auf dem Seil gewährleistet werden, sodass unterbrechungsfrei Messwerte erfasst werden und es deshalb zu einer präziseren Nivellierung der am Straßenfertiger vorgesehenen Einbaubohle während einer Einbaufahrt kommen kann.

Während einer Einbaufahrt des Straßenfertigers kann durch Anstoßen eines der beiden Bügeltaster an einer Halterung, bspw. an einem Spannblock zum Spannen des Seils oder zum Spannen eines anstatt des Seils genutzten Leitdrahts, dieser Bügeltaster derart an der Halterung kontaktbedingt nachgeben, d.h. von dieser weggedrückt werden, dass er dadurch vom Seil beabstandet wird, während entweder der andere der beiden Bügeltaster weiterhin auf dem Seil aufliegend verbleibt oder auf dieses verlagert wird, bevor der von der Halterung weggedrängte Bügeltaster seinen Kontakt zum Seil temporär unterbricht. Mindestens mit einem der beiden Bügeltaster ist die erfindungsgemäße Abtasteinrichtung deshalb stets in Kontakt mit dem Seil, so dass eine genauere Nivellierung möglich ist.

Vorzugsweise liegen die Bügeltaster als separate Bügeltaster vor, die um gesonderte, zueinander beabstandete Drehachsen, insbesondere vertikale Drehachsen, drehbar gelagert sind. Ein derartiger, zweigeteilter Aufbau der beiden Bügeltaster ermöglicht es, dass einer der beiden Bügeltaster an einer Halterung nachgibt und dadurch vom Seil beabstandet wird, wobei ungeachtet dessen der andere Bügeltaster an anderer Stelle entlang des Seils weiterhin auf dem Seil auffliegend positioniert bleibt, um die kontinuierliche Seilabtastung zu gewährleisten. Die beiden separaten Bügeltaster ergänzen sich damit einwandfrei, um eine kontinuierliche Seilabtastung entlang der Einbaustrecke zu ermöglichen.

Gemäß einer Ausführungsform der Erfindung lässt sich ein Abstand zwischen den beiden Drehachsen variieren. Die Bügeltaster können somit unterschiedlich weit auseinander montiert sein. Damit ist es möglich, die Bügeltaster hinsichtlich des gewählten Abstands, den die Halterungen entlang der Einbaustrecke zueinander haben, so zu montieren, dass sie nicht gleichzeitig an Halterungen vorbeigeführt werden. Somit können die Bügeltaster so weit auseinander, beispielsweise in einem Abstand zueinander von 30cm, 40cm oder 50cm, montiert werden, dass sie im Anwendungsfall nicht gleichzeitig den Seilkontakt verlieren.

Zweckmäßigerweise sind die Bügeltaster in Horizontalebene schwenkbar gelagert. Damit sie zum Seil und auf diesem in einer bevorzugten Ausrichtung positioniert sind, lassen sich die Bügeltaster vorzugsweise in einem vorbestimmten Schwenkbereich, ggf. schrittweise, verstellen. Dies kann derart geschehen, dass die Bügeltaster tendenziell eine quergerichtete Lage auf dem Seil einnehmen können bzw. in eine Lage automatisch zurückkehren, wenn sie eine Halterung passiert haben.

Eine Variante sieht vor, das mindestens einer der Bügeltaster in Form eines Einfachbügels oder in Form eines Mehrfachbügels vorliegt. In Form eines Einfachbügels liegen die Bügeltaster als Stäbe in kompakter Bauform vor und lassen sich jeweils einzeln zueinander beabstandet seitlich des Straßenfertigers, insbesondere beide auf Höhe und/oder seitlich einer vor der Einbaubohle des Straßenfertigers gelagerten Querverteilerschnecke, derart montieren, dass sie horizontal quer zur Einbaurichtung seitwärtsgerichtet, auf dem Seil aufliegen. In Form eines Mehrfachbügels könnten die Bügeltaster als jeweilige Drehkreuze hergestellt sein. Für Nivellierzwecke könnten die Drehkreuze beabstandet zueinander seitlich des Straßenfertigers, insbesondere beide auf Höhe und/oder seitlich einer vor der Einbaubohle des Straßenfertigers montierten Querverteilerschnecke, montiert sein. Eine Abtastvorrichtung mit Bügeltastern, die als Drehkreuze vorliegen, bietet insbesondere einen stabilen Aufbau.

Denkbar wäre es, dass die jeweiligen als Drehkreuze ausgebildeten Bügeltaster derart konfiguriert sind, dass, wenn an einem der beiden Drehkreuze ein daran ausgebildeter Bügeltaster in Kontakt mit einer Seilhalterung gerät, dieser Bügeltaster so um seine Drehachse verdrehbar ist, dass er erst dann das Seil verlässt, wenn ein anderer am Drehkreuz benachbarter Bügeltaster bereits auf dem Seil angekommen ist, sprich ein nahtloser Bügeltasterwechsel am jeweiligen Drehkreuzes möglich ist. Da hiermit sogar immer zwei Bügeltaster auf dem Seil aufliegend sind, können die Drehkreuze so zusammenwirken, dass sie ein Verkippen der Abtasteinrichtung verhindern können.

Eine Variante sieht vor, dass die Bügeltaster, insbesondere, wenn sie als Einfachbügel vorliegen, unter Federbelastung in die erste Ausrichtung vorgespannt sind. Damit können die Bügeltaster nachdem sie eine Halterung passiert haben, selbsttätig in deren erste Ausrichtung zurückschwenken, um wieder auf dem Seil aufzuliegen.

Denkbar wäre es, dass die Bügeltaster in Form eines um eine einzelne Drehachse drehbar gelagerten Zweifachbügels vorliegen. Davon kann die Messvorrichtung auch mehrere aufweisen. Ein solcher Zweifachbügel funktioniert derart, dass, sobald einer der beiden daran ausgebildeten Bügeltaster an einer Halterung anstößt, sich dieser Bügeltaster so um die gemeinsame Drehachse verdreht, dass er sich erst dann vom Seil beabstandet, wenn der andere Bügeltaster bereits soweit verdreht worden ist, dass er sich auf dem Seil befindet. Es findet damit durch einen derartigen Zweifachbügel ein Wechsel der daran gebildeten Bügeltaster auf dem Seil derart statt, dass von diesen, ohne entlang des Seils ausgeschwenkt zu werden, ein einzelner, und durch Ausschwenken dieses Bügeltasters zumindest temporär auch der andere, sprich beide Bügeltaster auf dem Seil aufliegen. Nachdem der durch die Halterung weggedrückte Bügeltaster die Halterung passiert hat, sprich nicht mehr von dieser weggedrückt wird, kann dieser durch Federbelastung in die erste Ausrichtung zurückgedreht werden, sodass sich der andere Bügeltaster wieder vom Seil abhebt. Dabei schwenkt sich also der andere, auf dem Seil aufliegende Bügeltaster derart vom Seil weg, dass er sich erst dann vom Seil beabstandet, wenn der zuvor von der Halterung weggedrückte Bügeltaster bereits so weit zurück verdreht worden ist, dass er sich wieder auf dem Seil befindet. Auch bei diesem Zurückschwenken um die Drehachse verbleiben die beiden Bügeltaster sowohl beim Aus- als auch beim Einschwenken in entgegengesetzter Richtung zumindest temporär gemeinsam auf dem Seil aufliegend, sodass ein Wechsel der beiden Bügeltaster auf dem Seil nahtlos ineinander übergeht, sprich immer mindestens einer der beiden Bügeltaster auf dem Seil aufliegt.

Zweckmäßig wäre es, wenn an einem Zweifachbügel beim Abtasten des Seils einer der Bügeltaster in der ersten Ausrichtung und der andere der Bügeltaster in der zweiten Ausrichtung unter Federbelastung vorgespannt gelagert sind. Aus dieser Federlagerung heraus lässt sich der Wechsel der beiden Bügeltaster auf dem Seil zuverlässig so durchführen, dass sie beim Passieren einer Halterung zumindest temporär zeitgleich auf dem Seil aufliegend positioniert sind, sprich durch Wegdrücken eines der beiden Bügeltaster an einer Halterung dadurch der andere Bügeltaster auf das Seil gedreht wird und auf dem Seil angekommen ist, bevor der weggedrückte Bügeltaster vom Seil beabstandet wird.

Vorteilhaft wäre es, wenn die Bügeltaster in einem Winkel größer als 80° Grad und kleiner als 100° Grad zueinander ausgerichtet sind, vorzugsweise im rechten Winkel zueinander ausgerichtet sind. In dieser Anordnung können die beiden Bügeltaster an einem Zweifachbügel für eine kontinuierliche Seilabtastung eingesetzt werden, da sie beim Passieren einer Halterung so zueinanderstehen, dass sie zumindest temporär zeitgleich auf dem Seil aufliegen, sprich eine kontinuierliche Seilabtastung möglich ist. Bevorzugterweise sind die Bügeltaster mindestens 10cm, weiter vorzugsweise mindestens 20cm lang ausgebildet.

Vorzugsweise weist die Abtastvorrichtung mindestens zwei zueinander beabstandete Bügeltaster auf, die beim Abtasten des Seils in der ersten Ausrichtung sind, wenn ein anderer, dritter Bügeltaster in der zweiten Ausrichtung ist. Dadurch lässt sich ein Verkippen der Abtastvorrichtung verhindern, da die beiden auf dem Seil aufliegenden Bügeltaster für die Abtastvorrichtung eine ausreichende Stütze bilden, um die Abtasteinrichtung in einer vorbestimmten Schwenklage, insbesondere horizontal ausgerichtet auf dem Seil zu halten.

Gemäß einer Ausführungsform der Erfindung bildet das Schwenkmodul ein Parallelogrammgelenk zum Tragen der Abtasteinrichtung aus. Das Parallelogrammgelenk sorgt für einen robusten Aufbau des Schwenkmoduls, damit dieses die Abtasteinrichtung in einer gewünschten, horizontalen Schwenklage halten kann.

Insbesondere weist das Parallelogrammgelenk eine Montageschiene für die Bügeltaster auf. Die Montageschiene bietet eine stabile Basis zur Anbringung der Bügeltaster, damit diese den Halterungen gezielt ausweichen können. Am Parallelogrammgelenk kann die Montageschiene horizontal ausgerichtet werden, um die daran montierten Bügeltaster in Horizontalebene zu positionieren.

Denkbar wäre es, dass die Bügeltaster längs der Montageschiene verstellbar gelagert sind, um einen Abstand zwischen den Bügeltastern, d.h. zwischen deren Drehachsen, einstellen zu können. Damit können die Kontaktstellen der Bügeltaster auf dem Seil unterschiedlich weit auseinanderliegen, um unterschiedliche Halterungsabstände zu berücksichtigen. Damit lässt vermeiden, dass die Bügeltaster gleichzeitig Halterungen passieren. Zu diesem Zwecke könnte es vorgesehen sein, dass die Montageschiene verlängerbar ist.

Vorstellbar wäre es, dass das Parallelogrammgelenk eine Gegengewichtseinheit für die Abtasteinrichtung aufweist. Anhand der Gegengewichtseinheit kann das Schwenkmodul in einer gewünschten Schwenklage positioniert werden, um die Abtasteinrichtung mit einer vorbestimmten Höhe oberhalb des Untergrunds auf dem Seil aufliegend zu führen. Insbesondere kann anhand der Gegengewichtseinheit eine Empfindlichkeit der Messvorrichtung eingestellt werden. Vorzugsweise ist eine durch die Gegengewichtseinheit ausübbare Kraft variierbar. Die Gegengewichtseinheit kann dafür an- und abbaubare Plattensegmente aufweisen.

Eine Variante sieht vor, dass die Bügeltaster an ihren äußeren Enden eine nach oben hin ansteigende Schräge ausbilden. Diese bietet eine Hilfe, um die Bügeltaster zuverlässig auf das Seil zurück zu führen.

Gemäß einer Ausführungsform der Erfindung ist vorgesehen, dass die Abtastvorrichtung mindestens ein Stopperelement zum Halten der Bügeltaster in einer vorbestimmten Ausrichtung der Bügeltaster zum Seil aufweist, insbesondere in einer sich orthogonal kreuzenden Ausrichtung zum Seil. Damit ist es möglich, die Bügeltaster während des Abtastens des Seils, im Wesentlichen quer zur Ausrichtung des Seils auf diesem zu führen, damit sie zuverlässig über das Seil gleiten und sichergestellt ist, dass die Bügeltaster nicht frontal auf einen Spannblock treffen.

Denkbar wäre es, dass das Stopperelement eine Einrastposition definiert, bspw. an einem Bügeltaster, der in Form eines Drehkreuzes vorliegt, oder als Endanschlag vorliegt, bspw. als Endanschlag an einem Einfach- oder Zweifachbügel, um die Bügeltaster beim Zurückschwenken quer zur Seilausrichtung zum Stoppen zu bringen.

Insbesondere sind die Bügeltaster für eine Seilabtastung sowohl rechts als auch links neben dem Straßenfertiger einsetzbar. Denkbar wäre es, dass die in Form eines Drehkreuzes angeordneten Mehrfachbügel derart ausgeführt sind, dass ein Seil sowohl in Fahrtrichtung rechts als auch in Fahrtrichtung links des Straßenfertigers abgetastet werden kann. Alternativ dazu könnte für die an der Maschine rechts und links durchgeführte Abtastung eine dementsprechende linke bzw. rechte Version des Drehkreuzes zur Verfügung gestellt werden.

Vorteilhaft wäre es, wenn die Einfach- oder Zweifachbügel derart ausgeführt sind, dass sie von der Abtastung in Fahrtrichtung rechts des Straßenfertigers auf eine Abtastung in Fahrtrichtung links des Straßenfertigers umgeschwenkt oder umgebaut werden können. Alternativ sind entsprechend links am Straßenfertiger bzw. rechts am Straßenfertiger einzusetzende Versionen vorgesehen.

Die Erfindung bezieht sich ferner auf einen Straßenfertiger mit mindestens einer erfindungsgemäßen mechanischen Messvorrichtung. Eine derartige Messvorrichtung ermöglicht es, während einer Einbaufahrt des Straßenfertigers eine kontinuierliche, kontaktbedingte Höhenmessung zur entlang der Einbaustrecke gespannten Referenz, bspw. einem Seil oder einem Leitdraht, durchzuführen, um darauf basierend eine genaue Nivellierung der Einbaubohle des Straßenfertigers zu ermöglichen. Ein derartiges kontaktbedingtes Abtasten der Höhenreferenz bietet insbesondere gegenüber kontaktlosen Messsystemen, beispielsweise Ultraschallsensoren, den Vorteil einer wetterunabhängigen, robusten Arbeitsweise.

Die Erfindung betrifft ferner ein Verfahren zum kontinuierlichen Abtasten eines entlang einer Einbaustrecke eines Straßenfertigers als Höhenreferenz gespannten Seils mittels einer Messvorrichtung, an welcher eine Abtasteinrichtung mit mindestens zwei Bügeltastern zum Abtasten des Seils eingesetzt wird. Das erfindungsgemäße Verfahren sieht vor, dass sich immer einer der beiden Bügeltaster in einer ersten Ausrichtung befindet, in welcher er auf dem Seil aufliegt, wenn der andere der beiden Bügeltaster von einer das Seil spannenden Halterung vom Seil weg in eine zweite Ausrichtung gedrückt wird, in welcher er vom Seil beabstandet wird. Damit wird erreicht, dass mindestens immer einer der beiden Bügeltaster auf dem Seil aufliegt, selbst dann, wenn die Bügeltaster Seilhalterungen passieren müssen. Dies ermöglicht ein kontinuierliches Abtasten des Seils mittels der Abtasteinrichtung, so dass für die Nivellierung der Einbaubohle des Straßenfertigers kontinuierlich Höhenmesswerte zur Verfügung stehen, um die Einbaubohle präzise zur Herstellung einer ebenen Einbauschicht zu nivellieren.

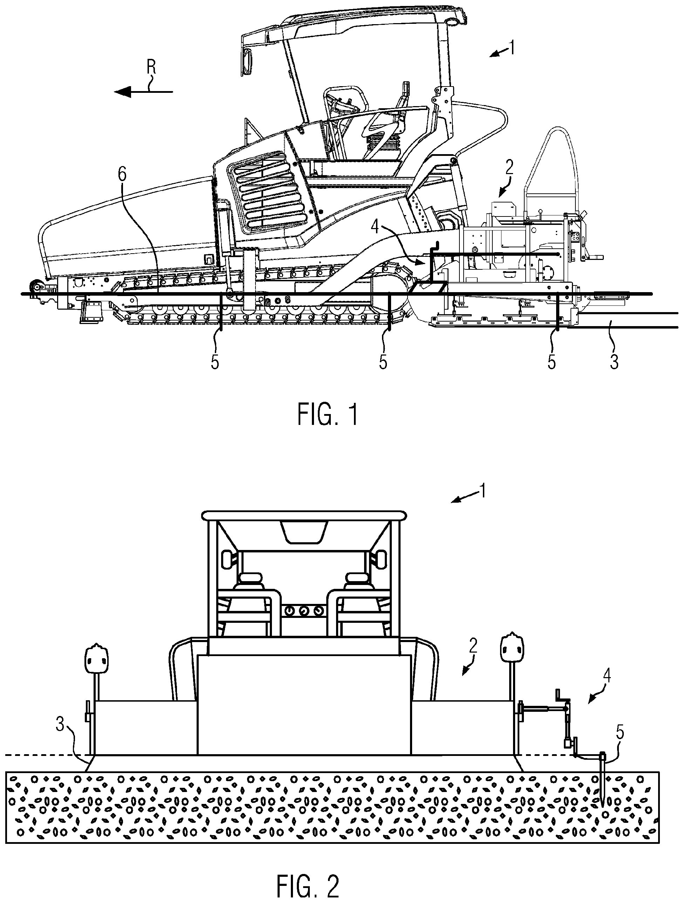

Die Erfindung wird anhand von in den Figuren gezeigten Ausführungsbeispielen genauer erläutert. Es zeigen:
- Figur 1: einen Straßenfertiger in Seitenansicht mit einer Messvorrichtung zum Abtasten eines Leitdrahts bzw. Seils,
- Figur 2: eine Rückansicht eines Straßenfertigers mit einer Messvorrichtung zum Abtasten eines Leitdrahts bzw. Seils,
- Figur 3: eine Messvorrichtung zur Leitdraht- bzw. Seilabtastung in isolierter Darstellung,
- Figuren 4A - 4C: kontinuierliches Abtasten des Leitdrahts bzw. Seils mittels der in Figur 3 gezeigten Messvorrichtung,
- Figuren 5A - 5D: kontinuierliches Abtasten des Leitdrahts bzw. Seils mittels einer alternativen Messvorrichtung, und
- Figur 6: eine Messvorrichtung gemäß einem weiteren Ausführungsbeispiel.
Technische Merkmale sind in den Figuren durchgehend mit denselben Bezugszeichen versehen. Figur 1 zeigt einen Straßenfertiger 1 in Seitenansicht während einer Einbaufahrt in Einbaurichtung R. Der Straßenfertiger 1 umfasst eine höhenverstellbare Einbaubohle 2 zum Herstellen einer neuen Einbauschicht 3 in Einbaurichtung R. An der Einbaubohle 2 ist eine Messvorrichtung 4 befestigt. Diese befindet sich seitlich einer zur Querverteilung eingesetzten, vorderhalb der Einbaubohle 2 positionierten Querverteilerschnecke. Die Messvorrichtung 4 dient zum Abtasten eines in Einbaurichtung R entlang der Einbaustrecke mittels Halterungen 5 gespannten Seils 6 bzw. Leitdrahts.

Während der Einbaufahrt des Straßenfertigers 1 werden die mittels der Messvorrichtung 4 erfassten Messwerte als Istwerte einer am Straßenfertiger 1 vorgesehenen Nivellierautomatik vorgehalten, worauf basierend die Höhenlage der Einbaubohle 2 über an vorderen Zugpunkten der Einbaubohle 2 angelenkte Nivellierzylinder gesteuert bzw. geregelt werden kann, um durch Nivellierung der Einbaubohle eine ebene Einbauschicht 3 herzustellen. Für ein präzises Nivellieren der Einbaubohle 2 ist es von Vorteil, wenn sich mittels der Messvorrichtung 4 das Seil 6 kontinuierlich abtasten lässt, selbst dann, wenn die Messvorrichtung 4 an den jeweiligen Halterungen 5 vorbeigeführt wird.

Figur 2 zeigt eine Rückansicht des Straßenfertigers 1. Figur 2 zeigt, dass sich das abgetastete Seil 6 außerhalb des Einbaubereichs befindet, also seitlich von der Einbaubohle 2.

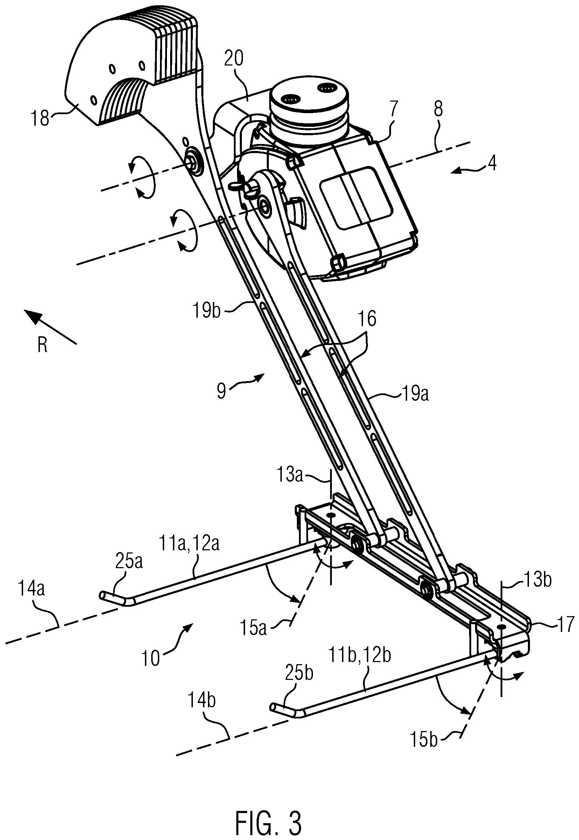

Figur 3 zeigt eine Variante der Messvorrichtung 4 in isolierter Darstellung. Die Messvorrichtung 4 umfasst einen Höhensensor 7. Am Höhensensor 7 ist um eine Schwenkachse 8 ein Schwenkmodul 9 schwenkbar gelagert. Zum Erfassen einer Schwenklage des Schwenkmoduls 9 ist im Höhensensor 7 ein nicht gezeigter Drehgeber aufgenommen, dessen Messsignale als Istwerte der Nivellierautomatik vorgehalten werden können, um die am Straßenfertiger 1 befestigte Einbaubohle 2 zum Ausgleichen von mittels der Messvorrichtung 4 abgetasteten Unebenheiten im Untergrund, auf welchen sich der Straßenfertiger 1 bewegt, auszugleichen.

Am unteren Ende des Schwenkmoduls 9 ist eine Abtasteinrichtung 10 mit zwei Bügeltastern 11a, 11b vorgesehen. In Figur 3 sind die Bügeltaster 11a, 11b in Form von Einfachbügeln 12a, 12b konfiguriert, die jeweils um eine vertikale Drehachse 13a, 13b verdrehbar gelagert sind.

In Figur 3 sind die beiden Bügeltaster 11a, 11b jeweils mittels Federbelastung in einer ersten Ausrichtung 14a, 14b vorgespannt gelagert. Gemäß der gestrichelten Darstellung in Figur 3 lassen sich die beiden Bügeltaster 11a, 11b aus der ersten Ausrichtung 14a, 14b heraus jeweils in eine zweite Ausrichtung 15a, 15b um die jeweiligen Drehachsen 13a, 13b drehen, wenn sie auf die zum Spannen des Seils 6 benutzen Halterungen 5 treffen. Nachdem die Bügeltaster 11a, 11b eine Halterung 5 passiert haben können sie aufgrund der Federbelastung aus der ausgeschwenkten, zweiten Ausrichtung 15a, 15b wieder in die erste Ausrichtung 14a, 14b zurückschwenken.

Das in Figur 3 gezeigte Schwenkmodul 9 bildet ein Parallelogrammgelenk 16 aus. An dessen unterem Ende ist die Abtasteinrichtung 10 montiert. Das Parallelogrammgelenk 16 verfügt über eine Montageschiene 17, an welcher die beiden Bügeltaster 11a, 11b zueinander beabstandet montiert sind. Des Weiteren verfügt das Schwenkmodul 9 über eine Gegengewichtseinheit 18, die am Parallelogrammgelenk 16 auf einer zur Montageschiene 17 abgewandten Seite angeordnet ist. Das Parallelogrammgelenk 16 weist einen ersten Schenkel 19a auf, der mit einem Ende schwenkbar um die Schwenkachse 8 am Höhensensor 7 gelagert ist und mit dem nicht gezeigten Drehgeber verbunden ist. Weiter umfasst das Parallelogrammgelenk 16 einen zweiten Schenkel 19b, der drehbar an einer am Höhensensor 7 montierten Halterung 20 befestigt ist. Am zweiten Schenkel 19b ist die Gegengewichtseinheit 18 vorgesehen. An unteren Enden der beiden Schenkel 19a, 19b ist die Montageschiene 17 gelenkig angebunden.

Die in Figur 3 gezeigte Messvorrichtung 4 kann um einen dritten, drehbar an der Montageschiene 17 zwischen den Bügeltastern 11a, 11b befestigten Bügeltaster ergänzt werden. Insbesondere ist die Messvorrichtung 4 entlang der Montageschiene 17 ausbaubar. Damit ist gemeint, dass sich eine oder mehrere Verlängerungsschienen an der Montageschiene 17 anbringen lässt, um ggf. einen oder weitere Bügeltaster 11a, 11b daran anzubringen. Denkbar wäre es, dass die Montageschiene 17 bereits mit einer teleskopierbaren Verlängerungsschiene zur Anbringung mindestens eines weiteren Bügeltasters 11a, 11b ausgestattet ist. Damit wäre es möglich an der Abtasteinrichtung 10 so viele Bügeltaster 11a, 11b, beispielsweise drei gesonderte Bügeltaster 11a, 11b, vorzusehen, sodass mindestens zwei zueinander beabstandete Bügeltaster 11a, 11b beim Abtasten des Seils 6 in der ersten Ausrichtung 14a, 14b auf dem Seil 6 aufliegend positioniert sind, während der dritte Bügeltaster an einer Halterung 5 ausschwenkt, um dieser auszuweichen. Damit lässt sich ein Verkippen der Messvorrichtung 4 vermeiden.

Die in Figur 3 gezeigten Bügeltaster 11a, 11b verfügen jeweils eine nach oben zeigende Schräge 25a, 25b. Diese Schrägen 25a, 25b unterstützen ein Zurückschwenken der Bügeltaster 11a, 11b auf das Seil 6 bzw. verhindern, dass die Bügeltaster 11a, 11b unterhalb des Seils 6 zurückschwenken.

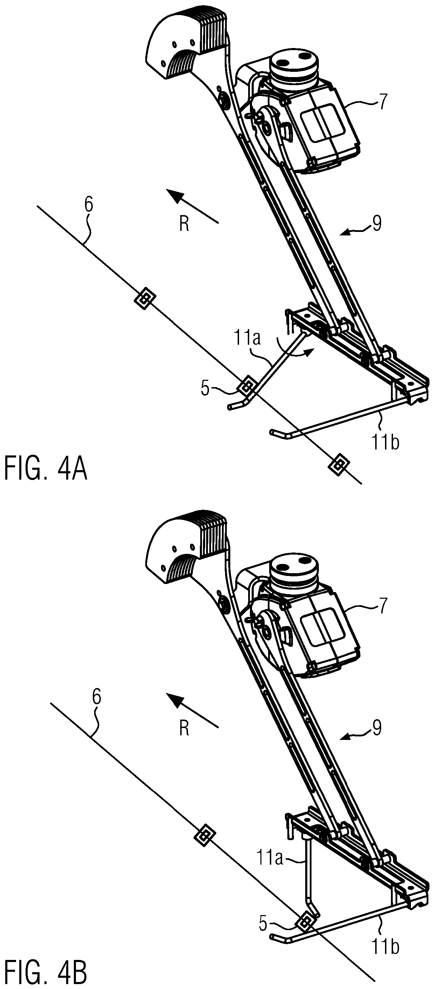

Figur 4A zeigt die Messvorrichtung 4 beim kontinuierlichen Abtasten des Seils 6. Beim Fortbewegen der Messvorrichtung 4 in Einbaurichtung R wird der in Figur 4A gezeigte Bügeltaster 11a an einer Halterung 5 aus seiner ersten Ausrichtung 14a heraus um die Drehachse 13a geschwenkt. Der andere Bügeltaster 11b ist in Figur 4A in der ersten Ausrichtung 14b positioniert. In Figur 4A liegen noch beide Bügeltaster 11a, 11b auf dem Seil 6 auf.

Bei einer Weiterfahrt des Straßenfertigers 1 wird die Messvorrichtung 4 ebenfalls weiter in Einbaurichtung R beweget, wodurch der Bügeltaster 11a noch weiter mittels der Halterung 5 weggedrückt wird. Dadurch wird der Bügeltaster 11a so weit geschwenkt, dass er das Seil 6 verlässt, sprich nicht mehr auf dem Seil 6 aufliegt. Dies zeigt Figur 4B. In dieser Momentaufnahme liegt nur noch der andere Bügeltaster 11b auf dem Seil 6.

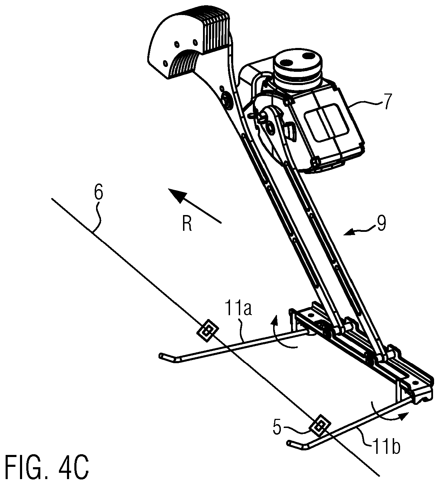

Bei Weiterfahrt des Straßenfertigers 1 lässt sich der Bügeltaster 11a an der Halterung 5 vorbeiziehen und schwenkt gemäß Figur 4C selbsttätig um seine Drehachse 13a in seine Ausgangsposition, sprich in die erste Ausrichtung 14a, in welcher er erneut auf dem Seil 6 aufliegt, zurück. Als nächstes stößt gemäß Figur 4C der andere Bügeltaster 11b an der vom Bügeltaster 11a bereits passierten Halterung 5 an und wird aus seiner ersten Ausrichtung 14b herausgedrückt, vom Seil 6 beabstandet und an der Halterung 5 vorbei manövriert, so wie es zuvor mit dem anderen Bügeltaster 11a geschah.

Die Figuren 4A - 4C zeigen, dass die beiden Bügeltaster 11a, 11b in der Art konfiguriert sind, dass einer der beiden Bügeltaster 11a, 11b mindestens immer dann in der ersten Ausrichtung 14a, 14b ist, in welcher er auf dem Seil 6 aufliegend positioniert ist, wenn der andere der beiden Bügeltaster 11a, 11b mittels der zum Spannen des Seils 6 eingesetzten Halterung 5 in eine zweite Ausrichtung 15a, 15b gedrückt ist, in welcher er vom Seil 6 beabstandet ist.

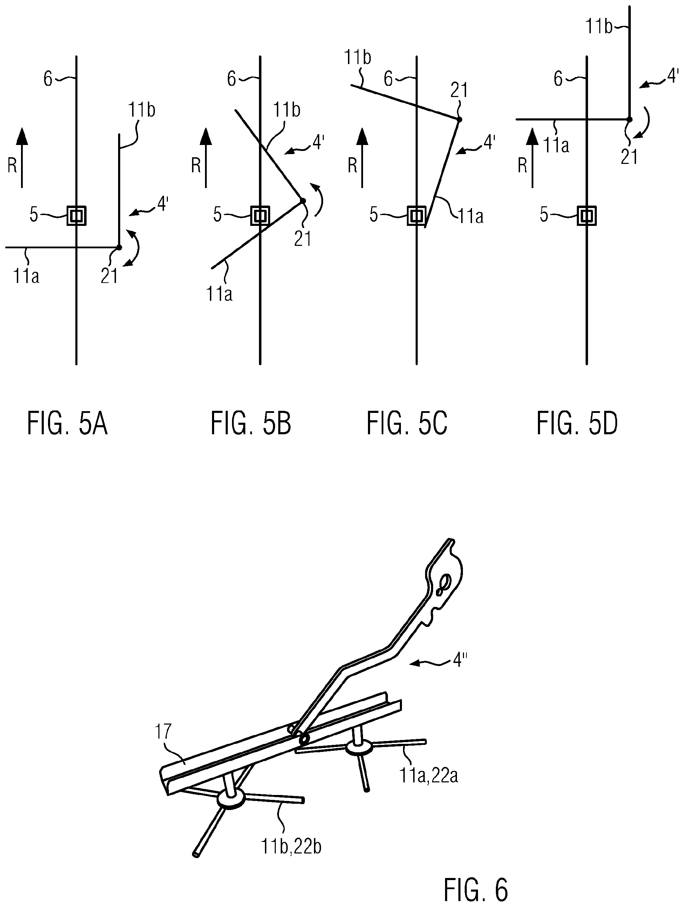

Dieses Prinzip der kontinuierlichen Seilabtastung gemäß der in den Figuren 4A - 4C gezeigten Bügeltaster 11a, 11b lässt sich auch anhand der in den Figuren 5A - 5D gezeigten Ausführungsform erreichen.

Die Figuren 5A - 5D zeigen eine Messvorrichtung 4' in schematischer Draufsichtdarstellung, an welcher die Bügeltaster 11a, 11b in Form eines um eine einzelne Drehachse 21 drehbar gelagerten Zweifachbügels vorliegen.

Grundsätzlich ist die Messvorrichtung 4' oberhalb des Seils 6 gemäß der in Figur 5A gezeigten Ausrichtung vorgespannt gelagert. Dabei liegt der Bügeltaster 11a auf dem Seil 6 auf, sprich befindet sich in der ersten Ausrichtung 14a. Der andere Bügeltaster 11b befindet sich in der zweiten Ausrichtung 15b, da er nicht auf dem Seil 6 aufliegt, sondern von diesem beabstandet ist.

In Figur 5B trifft der Bügeltaster 11a auf die Halterung 5 und wird von dieser weggedrückt, wodurch sich die die Bügeltaster 11a, 11b gemeinsam um die Drehachse 21 drehen. Dadurch wird der Bügeltaster 11b auf das Seil 6 geschwenkt. Gemäß der in Figur 5B gezeigten Momentaufnahme während der Einbaufahrt sind die beiden Bügeltaster 11a, 11b jeweils auf dem Seil 6 aufliegend positioniert.

Figur 5C zeigt, dass bei Weiterfahrt des Straßenfertigers 1 die die Bügeltaster 11a, 11b sich weiter so um die Drehachse 21 verdrehen, dass zum in Figur 5C gezeigten Zeitpunkt der Bügeltaster 11a vom Seil 6 beabstandet ist, während der Bügeltaster 11b auf dem Seil 6 aufliegt.

Eine Weiterfahrt des Straßenfertigers 1 führt dazu, dass gemäß Figur 5D die Bügeltaster 11a, 11b gemeinsam in ihre Ausgangslage aus Figur 5A um die Drehachse 21 zurückschwenken, sodass der Bügeltaster 11a wieder auf dem Seil 6 aufliegt.

Die in den Figuren 5A - 5D gezeigte Messvorrichtung 4' ermöglicht es, dass immer einer der beiden Bügeltaster 11a, 11b, zeitweise sogar beide Bügeltaster 11a, 11b, auf dem Seil 6 aufliegt bzw. aufliegen, um eine kontinuierliche Seilabtastung auch beim Passieren der Halterungen 5 entlang der Einbaustrecke zu ermöglichen.

Figur 6 zeigt eine Messvorrichtung 4", bei welcher die Bügeltaster 11a, 11b in Form von um zueinander beabstandete Drehachsen 13a, 13b rotierbare Mehrfachbügel vorliegen. Gemäß Figur 6 sind die Mehrfachbügel als Drehkreuze 22a, 22b ausgebildet. Wie die in den Figuren 4A - 4C gezeigten Bügeltaster 11a, 11b können die in Figur 6 gezeigten Drehkreuze 22a, 22b derart an der Messvorrichtung 4" ausgebildet sein, dass eines der beiden Drehkreuze 22a, 22b mindestens immer dann in einer ersten Ausrichtung 14a, 14b positioniert ist, in welcher es auf dem Seil 6 aufliegt, wenn das andere Drehkreuz 22a, 22b mittels einer zum Spannen des Seils 6 eingesetzten Halterung 5 in eine zweite Ausrichtung 15a, 15b gedrückt ist, in welcher es vom Seil 6 beabstandet ist, sprich nicht mehr auf diesem aufliegt.

## Patentansprüche

1. Messvorrichtung (4, 4`, 4") für einen Straßenfertiger (1), umfassend einen Höhensensor (7) sowie ein Schwenkmodul (9), das am Höhensensor (7) um eine Schwenkachse (8) schwenkbar gelagert ist und das eine Abtasteinrichtung (10) mit mindestens zwei Bügeltastern (11a, 11b) zum Abtasten eines entlang einer Einbaustrecke des Straßenfertigers (1) als Höhenreferenz gespannten Seils (6) aufweist, **dadurch gekennzeichnet, dass** die beiden Bügeltaster (11a, 11b) derart konfiguriert sind, dass einer der beiden Bügeltaster (11a, 11b) mindestens immer dann in einer ersten Ausrichtung ist (14a, 14b), in welcher er auf dem Seil (6) aufliegend positioniert ist, wenn der andere der beiden Bügeltaster (11a, 11b) mittels einer zum Spannen des Seils (6) eingesetzten Halterung (5) in eine zweite Ausrichtung (15a, 15b) gedrückt ist, in welcher er vom Seil (6) beabstandet ist.

2. Messvorrichtung nach Anspruch 1, **dadurch gekennzeichnet, dass** die Bügeltaster (11a, 11b) als separate Bügeltaster (11a, 11b) vorliegen, die um zueinander beabstandete Drehachsen (13a, 13b) drehbar gelagert sind.

3. Messvorrichtung nach Anspruch 2, **dadurch gekennzeichnet, dass** mindestens einer der Bügeltaster (11a, 11b) in Form eines Einfachbügels (12a, 12b) oder in Form eines Mehrfachbügels vorliegt.

4. Messvorrichtung nach Anspruch 2 oder 3, **dadurch gekennzeichnet, dass** die Bügeltaster (11a, 11b) unter Federbelastung in die erste Ausrichtung (14a, 14b) vorgespannt sind.

5. Messvorrichtung nach Anspruch 1, **dadurch gekennzeichnet, dass** die Bügeltaster (11a, 11b) in Form eines um eine einzelne Drehachse (21) drehbar gelagerten Zweifachbügels vorliegen.

6. Messvorrichtung nach Anspruch 5, **dadurch gekennzeichnet, dass** beim Abtasten des Seils (6) einer der Bügeltaster (11a, 11b) in der ersten Ausrichtung (14a, 14b) und der andere der Bügeltaster (11a, 11b) in der zweiten Ausrichtung (15a, 15b) unter Federbelastung vorgespannt gelagert ist.

7. Messvorrichtung nach Anspruch 5 oder 6, **dadurch gekennzeichnet, dass** die Bügeltaster (11a, 11b) in einem Winkel größer als 80° und kleiner als 100° zueinander ausgerichtet sind, vorzugsweise im rechten Winkel zueinander ausgerichtet sind.

8. Messvorrichtung einem der vorangehenden Ansprüche, **dadurch gekennzeichnet, dass** die Abtastvorrichtung mindestens zwei zueinander beabstandete Bügeltaster (11a, 11b) aufweist, die beim Abtasten des Seils (6) in der ersten Ausrichtung (14a, 14b) sind, wenn ein anderer, dritter Bügeltaster (11a, 11b) in der zweiten Ausrichtung (15a, 15b) ist.

9. Messvorrichtung einem der vorangehenden Ansprüche, **dadurch gekennzeichnet, dass** das Schwenkmodul (9) ein Parallelogrammgelenk (16) zum Tragen der Abtasteinrichtung (10) ausbildet.

10. Messvorrichtung nach Anspruch 9, **dadurch gekennzeichnet, dass** das Parallelogrammgelenk (16) eine Montageschiene (17) für die Bügeltaster (11a, 11b) aufweist.

11. Messvorrichtung nach Anspruch 9 oder 10, **dadurch gekennzeichnet, dass** das Parallelogrammgelenk (16) eine Gegengewichtseinheit (18) für die Abtasteinrichtung (10) aufweist.

12. Messvorrichtung einem der vorangehenden Ansprüche, **dadurch gekennzeichnet, dass** die Bügeltaster (11a, 11b) an ihren äußeren Enden eine nach oben hin ansteigende Schräge (25a, 25b) ausbilden.

13. Messvorrichtung einem der vorangehenden Ansprüche, **dadurch gekennzeichnet, dass** die Abtasteinrichtung (10) mindestens ein Stopperelement zum Halten der Bügeltaster (11a, 11b) in einer vorbestimmten Ausrichtung zum Seil (6) aufweist und/oder dass die Bügeltaster (11a, 11b) für eine Seilabtastung sowohl rechts als auch links neben dem Straßenfertiger (1) einsetzbar sind.

14. Straßenfertiger (1) mit mindestens einer Messvorrichtung (4, 4`, 4") nach einem der vorangehenden Ansprüche.

15. Verfahren zum kontinuierlichen Abtasten eines entlang einer Einbaustrecke eines Stra-ßenfertigers (1) als Höhenreferenz gespannten Seils (6) mittels einer Messvorrichtung (4, 4', 4"), an welcher eine Abtasteinrichtung (10) mit mindestens zwei Bügeltastern (11a, 11b) zum Abtasten des Seils (6) eingesetzt wird, **dadurch gekennzeichnet, dass** sich einer der beiden Bügeltaster (11a, 11b) in einer ersten Ausrichtung (14a, 14b) befindet, in welcher er auf dem Seil (6) aufliegt, wenn der andere der beiden Bügeltaster (11a, 11b) von einer das Seil (6) spannenden Halterung (5) vom Seil (6) weg in eine zweite Ausrichtung (15a, 15b) gedrückt wird, in welcher er vom Seil (6) beabstandet wird.
